# EUROPEAN PATENT SPECIFICATION

(11) **EP 3 323 290 B1**
(45) Date of publication and mention of the grant of the patent: **01.07.2020**
(21) Application number: 16199814.1
(22) Date of filing: 21.11.2016
(51) Int. Cl.: A01N 65/08, A01N 65/00, A01N 25/02, A01N 25/12, C09K 17/32, C09K 17/40, A01P 7/04

(54) **SOIL CONDITIONING AGENTS**
BODENVERBESSERUNGSMITTEL
AGENTS D'AMENDEMENT DU SOL

(43) Date of publication of application: 23.05.2018
(73) Proprietor: OGET Innovations GmbH, 8412 Allerheiligen bei Wildon (AT)
(72) Inventor: Horváth, András, 4485 Nagyhalász (HU)
(74) Representative: Haseltine Lake Kempner LLP

(56) References cited:
- CN-A- 104 082 347
- US-A- 4 676 985
- MICHAEL VILLANI ET AL: "Butterfly milkweed extract as a feeding deterrent of the wireworm, Melanotus communis", ENTOMOLOGIA EXPERIMENTALIS ET APPLICATA., vol. 37, no. 1, 5 January 1985 (1985-01-05), pages 95-100, XP055337486, NL ISSN: 0013-8703, DOI: 10.1111/j.1570-7458.1985.tb03458.x
- MICHAEL VILLANI AND FRED GOULD: "Screening of crude plant extracts as feeding deterrents of the wireworm, Melanotus communis", ENTOMOLOGIA EXPERIMENTALIS ET APPLICATA, KLUWER ACADEMIC PUBLISHERS, DORDRECHT, NL, vol. 37, no. 1, 1 March 1985 (1985-03-01), pages 69-75, XP009117234, ISSN: 0013-8703, DOI: 10.1007/BF00366810
- R E Harry-O 'kuru ET AL: "Milkweed seedmeal: a control for Meloidogyne chitwoodi on potatoes", ELSEVIER Industrial Crops and Products, 1 January 1999 (1999-01-01), pages 145-150, XP055337497, Retrieved from the Internet: URL:https://pubag.nal.usda.gov/pubag/downl oadPDF.xhtml?id=25487&content=PDF
- ROBERT P ADAMS ET AL: "Phytochemicals for liquid fuels and petrochemical substitutions: Extraction procedures and screening resuls", ECONOMIC BOTANY, vol. 37, no. 2, 1 April 1983 (1983-04-01), pages 207-215, XP055337512, DOI: 10.1007/BF02858787
- R. A. BUCHANAN ET AL: "Hydrocarbon- and rubber-producing crops", ECONOMIC BOTANY., vol. 32, no. 2, 1 April 1978 (1978-04-01), pages 131-145, XP055337521, US ISSN: 0013-0001, DOI: 10.1007/BF02866867
- GABRIELLA KAZINCZI ET AL: "ALLELOPATHY OF SOME IMPORTANT WEEDS IN HUNGARY", ZBORNIK PREDAVANJ IN REFERATOV 11. SLOVENSKEGA POSVETOVANJA O VARSTVU RASTLIN Z MEDNARODNO UDELEZBO, 12 November 2013 (2013-11-12), pages 410-415, XP055337523, DOI: http://citenpl.internal.epo.org/wf/web/cit enpl/citenpl.html?_url=http%3A//dvrs.bf.un i-lj.si/spvr/2013/71Kazinczi.pdf
- Z. A. M. BAKA: "Efficacy of wild medicinal plant extracts against predominant seed-borne fungi of broad bean cultivars", ACTA PHYTOPATHOLOGICA ET ENTOMOLOGICA HUNGARICA, vol. 50, no. 1, 1 June 2015 (2015-06-01), pages 45-65, XP055337526, HU ISSN: 0238-1249, DOI: 10.1556/038.50.2015.1.5

## Description

### FIELD OF THE INVENTION

The invention concerns a soil conditioning agent comprising an extract of a plant from the genus *Asclepias* and a process for preparing the same. The invention further relates to granulates comprising the soil conditioning agent of the invention and a process for preparing the same. The use of the soil conditioning agents and granulates are also part of the invention.

### BACKGROUND OF THE INVENTION

Soil-dwelling pests can have a detrimental effect on the health of a plant growing in infested soil. In the last century, the use of synthetic compounds as pesticides, insecticides, fungicides and miticides to treat the plant and the soil have proven to be effective in the control of plant pests. Crops with improved yields have been obtained as a result of the use of chemical pest controlling agents. However, it has been recognised that part of these chemical pest controlling agents are washed into the ground water supply and also accumulate in the plants, from where they are passed on when consumed by animals or humans having potentially serious health consequences. This has led to an increased awareness and a need to control the use of such synthetic compounds to combat pests.

Furthermore, the situation has been worsened by the resistance of the pests to synthetic pesticides, insecticides, fungicides and miticides. The problem of increased resistance and accumulation of the chemical agent in the plant has led to the search for alternative compositions to fight pests. As a consequence of the effects mentioned above, increasing regulations have been imposed and in some cases effective chemical pest controlling agents were banned in many countries.

Some methods of controlling pest have been disclosed in the art such as in: US 4 676 985 A; M. Vilani et al. "Butterfly milkweed extract as a feeding deterrent of wireworm, Melanotus communis", ENTOMOLOGIA EXPERIMENTALIS ET APPLICATA., vol. 37, no. 1, (1985-01-05), pages 95-100; M. Vilani and F Gould "Screening of crude plant extracts as feeding deterrents of the wireworm, Melanotus communis", ENTOMOLOGIA EXPERIMENTALIS ET APPLICATA, vol. 37, no. 1, (1985-03-01), pages 69-75; R. E. Harry-O 'kuru et al. "Milkweed seedmeal: a control for Meloidogyne chitwoodi on potatoes", Industrial Crops and Products, (1999-09), pages 145-150; R. P. ADAMS et al. "Phytochemicals for liquid fuels and petrochemical substitutions: Extraction procedures and screening results", ECONOMIC BOTANY, vol. 37, no. 2 (1983-04-01), pages 207-215; R. A. Buchanan et al. "Hydrocarbon- and rubber-producing crops", ECONOMIC BOTANY., vol. 32, no. 2, (1978-04-01), pages 131-145; Z. A. M. Baka "Efficacy of wild medicinal plant extracts against predominant seed-borne fungi of broad bean cultivars", ACTA PHYTOPATHOLOGICA ET ENTOMOLOGICA HUNGARICA, vol. 50, no. 1, (2015-06-01), pages 45-65; G. Kazinczi et al. "Allelopathy of some important weeds in Hungary", ZBORNIK PREDAVANJ IN REFERATOV 11. SLOVENSKEGA POSVETOVANJA O VARSTVU RASTLIN Z MEDNARODNO UDELEZBO, (2013-11-12), pages 410-415 and CN 104 082 347 A.

There is a need to employ more environmentally safe methods for the control of pests as a viable alternative to the use of synthetic chemical pesticides, insecticides, fungicides and miticides.

### SUMMARY OF THE INVENTION

It is the aim of the present invention to provide a soil conditioning agent from a natural extract to provide an environmentally safe way of controlling pests. In addition, the soil conditioning agents are intended to improve the condition of the soil treated.

The present invention is defined in the appended claims.

In accordance with a first aspect, there is provided a process for preparing a soil conditioning agent comprising an extract of a plant from the genus *Asclepias,* wherein the extraction is carried out using a multi-step extraction process comprising the steps of:
a) providing chopped and dried superterranean parts of the plant;
b) mixing the chopped and dried superterranean parts of the plant with one or more solvents selected from water and alcohol;
c) filtering the solvent-wet biomass of step b;
d) mixing the remaining solvent-wet biomass of step c with one or more solvents selected from a ketone type solvent; and
e) filtering the solvent-wet biomass of step d. This extraction process is simple, effective and cost effective.

In accordance with a second aspect, there is provided the soil conditioning agent comprising the extract obtainable by the multi-step extraction process of the first aspect. The soil conditioning agent comprises a natural extract of a plant from the genus *Asclepias* and as such provides an environmentally friendly alternative to the use of synthetic chemical pesticides, insecticides, fungicides and miticides.

In accordance with a third aspect, there is provided a granulate comprising the soil conditioning agent of the second aspect. A method of producing a granulate of the third aspect is provided in a fourth aspect. The granulate is convenient to handle, store and apply. Moreover, the matrix material composition and the structure of the granulate itself has an ameliorating effect.

In accordance with a fifth aspect there is provided a method of treating soil by applying a soil conditioning agent of the second aspect or a granulate of the third aspect to the soil. Once applied to the soil, the granulate releases the soil conditioning agents over a prolonged period. It has been found that the granulate remains in the soil for a significant period of time, especially in comparison with other methods of soil treatment. A single application during a season makes the granulate easy to use as it maintains the desired effect of repelling pests from the treated soil.

The present invention has the advantage that the soil conditioning agents and the granulates claimed may be environmentally friendly and can be effective in improving the condition of the soil in terms of its water and/or air buffering, water drainage, nutrient content, storage and release and/or rendering it free from pests. The present invention also has the advantage that the soil conditioning agents may control pests in the treated area of soil without killing the targeted pests or the useful soil biota.

Plants growing on treated soil have been observed to be in better health than plants growing on untreated soil. In the absence of pests, improved water and nutrient utilisation, less plant damage will feature in the improved soil and hence the yields and condition of the plant growing on this soil may be improved. As the present invention achieves improved soil characteristics without the use of synthetic chemical pesticides, insecticides, fungicides and miticides, the introduction of harmful compounds to the soil and ground water, which can enter and remain in the plant are avoided.

### DETAILED DESCRIPTION

In accordance with the first aspect there is provided a process for preparing a soil conditioning agent comprising an extract of a plant from the genus *Asclepias,* wherein the extraction is carried out using a multi-step extraction process comprising the steps of:
a) providing chopped and dried superterranean parts of the plant;
b) mixing the chopped and dried superterranean parts of the plant with one or more solvents selected from water and alcohol;
c) filtering the solvent-wet biomass of step b;
d) mixing the remaining solvent-wet biomass of step c with one or more solvents selected from a ketone type solvent; and
e) filtering the solvent-wet biomass of step d. Soil conditioning agents may improve a number of properties of the soil, such as rendering them free from pests,
improving their water utilisation, improving the drainage of the soil and improving the nutrient content of the soil. The soil conditioning agents of the present invention comprise an extract of a plant from the genus *Asclepias* obtainable by the multi-step extraction process described above. In comparison to synthetic chemical pesticides, insecticides, fungicides and miticides, the natural extract according to the invention is not harmful to human and animal health. In comparison to synthetic chemical pesticides, insecticides, fungicides and miticides, the natural extract according to the invention does not influence the behaviour of the earthworms. Earthworms are important to the condition of the soil as their activity aerates and mixes the soil. The nutrient content of the soil is also aided by earthworms as they create nutrient rich castings that is important for plant growth.

Plants of the genus *Asclepias,* commonly known as milkweeds are herbaceous perennial, dicotyledonous plants. In the present invention, the extract of the dried superterranean parts of the plant are used as a soil conditioning agent. As used herein, the term "superterranean" refers to the part of the plant that is above ground such as the stem, flower and/or leaf. The root of the plant is not used in the extraction process of the present invention.

Plant species of the genus *Asclepias* according to the present invention include, but are not limited to: *Asclepias albicans, Asclepias amplexicaulis, Asclepias asperula, Asclepias californica, Asclepias cordifolia, Asclepias cryptoceras, Asclepias curassavica, Asclepias curtissii, Asclepias eriocarpa, Asclepias erosa, Asclepias exaltata, Asclepias fascicularis, Asclepias humistrata, Asclepias incarnata, Asclepias lanceolata, Asclepias linaria, Asclepias linearis, Asclepias longifolia, Asclepias meadii, Asclepias nyctaginifolia, Asclepias obovata, Asclepias purpurascens, Asclepias quadrifolia, Asclepias rubra, Asclepias solanoana, Asclepias speciosa, Asclepias subulata, Asclepias subverticillata, Asclepias sullivantii, Asclepias syriaca, Asclepias tuberosa, Asclepias uncialis, Asclepias variegata, Asclepias verticillata, Asclepias vestita, Asclepias viridiflora, Asclepias viridis and Asclepias welshii.* Due to phytochemical aspects, the preferred species is selected from *Asclepias albicans, Asclepias asperula, Asclepias incarnata, Asclepias speciosa, Asclepias subulata, Asclepias syriaca* and *Asclepias tuberosa.*

An extract in the meaning of the invention must be obtainable by a solid-liquid extraction process as defined above.

The solvent(s) used in step b) is/are selected from water and alcohol, wherein the alcohol may be selected from propanols, butanols, pentanols or hexanols. The extraction is preferably not carried out with ethanol.

The solvent(s) used in step d) is/are selected from a ketone type solvent, which may be selected from acetone, butanones, cyclopentanones , ethyl isopropyl ketone, 2-hexanone, methyl isobutyl ketone, methyl isopropyl ketone, 3-methyl-2-pentanone, 2-pentanone, 3-pentanone and mixtures thereof.

In one embodiment the filtrates of steps b) and d) of the above process are concentrated. The concentrated extract may then be diluted in a solvent such as glycerol. The said solution comprises from about 0.1% to 2% by weight, from about 0.5% to 3% by weight, from about 1% to 2% by weight, from about 1% to 4% by weight, from about 2% to 5% by weight, from about 3% to 7% by weight, from about 4% to 9% by weight, from about 5% to 10% by weight, from about 7% to 15% by weight, from about 10% to 20% by weight of the concentrated extract.

Preferably, the process for preparing a soil conditioning agent according to the invention provides an extract comprising one or more terpenes, such as phytol. Phytol may be present in an amount of from about 0.02 % to 0.1 %, from about 0.5 % to 1 % by weight, from about 0.5 % to 2 % by weight, from about 0.6 % to 1.8 % by weight, from about 0.7 % to 1.6 % by weight, from about 0.8 % to 1.4 % by weight, from about 0.9 % to 1.3 % by weight, from about 1.0 % to 1.2% by weight, from about 1.1 % to 1.2% by weight of the concentrated extract. Without wishing to be bound by theory, it is thought that terpene such as phytol act as an irritants, repelling any pests that it contacts.

Preferably, the process for preparing a soil conditioning agent according to the invention provides an extract comprising terpene in an amount less than 50 % by weight, more preferably in an amount less than 45 % by weight, more preferably in an amount less than 40 % by weight, more preferably in an amount less than 30 % by weight, more preferably in an amount less than 20 % by weight, more preferably in an amount less than 15 % by weight of the concentrated extract.

The extract from the plant of the genus *Asclepias* may also comprise steroidal compounds, oxygen containing aliphatic/alicyclic hydrocarbons, aliphatic carboxylic acids, oxygen containing monoaromatic hydrocarbons, aliphatic amides, palmitic acid, oleic acid, linoleic acid, lignoceric acid, stearic acid, tricosanoic acid, vanillic acid, galic acid, syringic acid and/ or p-coumaric acid. Without wishing to be bound by theory, it is thought that the listed compounds bind to the colloidal phases of the soil in the rhizosphere, thereby creating a soil environment favourable for plant growth.

Preferably, the soil conditioning agents according to the invention do not contain mineral salt additives from an external source. The following inorganic components may be present in the soil conditioning agents of the present invention and are yielded from the plant material during the extraction process: phosphorus, potassium, calcium, magnesium, sulfur, nitrogen, boron, iron, manganese, molybdenum, zinc, arsenic, cadmium, cobalt, chrome, copper, mercury, nickel, lead and/or selenium.

In a particularly preferred embodiment a plant of the genus *Asclepias* is extracted using water and isopropanol (step b) and butanone (step d). In a preferred embodiment the concentrate of an extract of *Asclepias* using water and isopropanol (step b) and butanone (step b), is diluted with glycerol. Preferably, the solution with glycerol comprises from about 1.1 % to 1.2% by weight, from about 1.0 % to 2.0 % by weight or from about 1.5 % to 3.0 % by weight of the concentrated extract.

In accordance with a second aspect, there is provided a soil conditioning agent obtainable by the process of the first aspect.

In accordance with a third aspect, there is provided a granulate comprising the soil conditioning agent of the second aspect. The granulate comprises a porous vitreous, ceramic material or quartz sand.

Porous materials according to the invention include naturally occurring, partly devitrificated pumice tuffs as well as industrially produced expanded clay-ceramic pebbles. Advantageously, such porous materials have the capability of taking up soil conditioning agents and releasing them at a slow rate. Preferably, the porous tuffaceous material comprises zeolite minerals, more preferably the porous tuffaceous material obtained by the process of devitrification is completely zeolitized. Preferably, the porous pumice tuff is a product of devitrification and comprises the zeolite mineral clinoptilolite, more preferably the porous material is clinoptilolite. Zeolites are microporous aluminosilicate minerals with interconnected microporous spaces in the crystal structure, which allow for large amounts of soil conditioning agent to be stored and subsequently to be released slowly.

Naturally occurring zeolites are formed when volcanic rocks and ash layers react with alkaline water. Moreover, zeolites can also be produced by artificial synthesis. Zeolites are microporous structures that can accommodate a wide variety of cations and also have a high water storage capacity. Zeolites have an ordered crystal structure with a very large amount of cavities and a large active surface area (typically 400-600 m²/g). In addition to the zeolites, alternative minerals with a porous or layer structure, which can be used as the granulates according to the invention include sepiolite, palygorskite, kaolinate, halloysite, metahalloysite, illite, vermiculite, montmorillonite, beidellite, nontronite, saponite, glauconite, chlorite, attapulgite, gibbsite, hematite, goethite, limonite and pyrolusite, or mixtures thereof.

The granulate according to the invention can be made by applying the soil conditioning agent onto the granules by spraying, wetting dipping, misting, drenching, showering, fogging, soaking, dampening, drizzling, dousing and splashing. Preferably, the soil conditioning agent is sprayed onto the granulate. Preferably the treated granulate is made up of 80% zeolite and 20% soil conditioning agent. The granulate comprising the soil conditioning agent is convenient to handle and store, with a shelf life of at least 2 years.

In a further embodiment of the invention the soil conditioning agent and/or a granulate comprising a soil conditioning agent are used for treating soil. The soil conditioning agents repel pests. Preferably, the pest is *Nematoda, Nemathelminthes, Aschelminthes, Ditylenchus dipsaci, Globodera rostochiensis, Insecta, Elateridae, Coleopthera, Melolonthidae, Melolontha melolontha, Curculionidae, Tanimecus dilaticollis, Cleonus punctiventris, Chrysomelidae, Arthropoda, Belonolaimus, Criconemoide, Helicotylenchu, Heterodera zeae, Hoplolaimus, Xiphinema, Longidorus, Meloidogyne, Pratylenchus, Paratrichodorus, Tylenchorhynchus, Globodera pallida, Ditylenchus destructor, Chaetognatha, Gnathostomulid, Hemichordata, Nematomorpha, Nemertea, Onychophora, Phoronida, Platyhelminthes, Priapulida, Sipuncula, Phytophythora, Fusarium, Pythium, Rhizoctonia, Sclerotinia, Erwinia, Verticillium, Agriotes such as Agriotes lineatus, Agriotes mancus, Agriotes obscurus, Agriotes sputator, Diabrotica, Diabrotica virgifera, Diabrotica virgifera virgifera, Cydia pomonella, Eupoecilia ambiguella, Lobesia botrana, Leptinotarsa decemlineata, Psylliodes, Chetocnema tibialis* and *Leptinotarsa decemlineata,* and where applicable, the larvae thereof. In a further embodiment, the soil conditioning agents do not significantly influence the behaviour of earthworms, such as *Lumbricus terrestris.* The behaviour of the earthworms is not significantly influenced when using the soil conditioning agent of the present invention. Therefore, the use of the soil conditioning agent leads to little or no displacement of the earthworms. Without being bound by theory, it is thought that the soil conditioning agents of the invention do not act as pesticides, insecticides, fungicides and miticides by killing the target pest. Rather, the soil conditioning agent is thought to act to repel the pest with the use of skin irritating agents such as terpenes. The pest free area is therefore predominantly due to the pests being displaced from the treated area, either to the soil surface or to other areas of soil.

Plants may be planted in the soil before, during or after it is treated with the soil conditioning agent. Preferably the plant is selected from the list of cereals, such as wheat, barley, oats, rye and triticale, sugar beet, fodder beet, beetroot, sunflower, pumpkin, broad bean, millet, rapeseed, green pea, soybean, peas, leguminose, maize, oilseed rape, parsley, celery, mustard, grapevine, stone fruit, such as peaches, plums and cherries, apple, pear, berries, pepper, tomato, cabbage, potato, sweet potato, garlic, carrot, sweet pepper, cucumber, lettuce, root vegetables, radish, horseradish, red radish and white radish.

After application on the soil, the soil conditioning agent may be active for at least at least 65 days, or at least 40 days, or at least 35 days or at least 30 days. The granulate comprising the soil conditioning agent is active for at least 70 days, at least 65 days, at least 60 days, at least 55 day or at least 50 days after application. The activity as stated above applies to normal weather conditions for the region and time of year, whereas some variation may occur with, for example, unexpectedly high rainfall or unexpectedly high temperatures.

Plants that grow on soil treated with the soil conditioning agent and/or granulate according to the invention may be in better health than plants planted in untreated soil. The plants growing in the treated soil may have leaves with thick plant cuticles, which may be due to the manifestation of diseases in such plants being lower than in untreated plants.

The formulations according to this invention can be applied to the area of soil to a depth of 5 to 8 cm in an amount of about 10 to 20 kg/ha, preferably, about 15 kg/ha.

### EXAMPLES AND EXPERIMENTAL DATA

100 g of chopped and dried milkweed (stalk and leaves) is mixed at room temperature for 1 hour with a solvent containing 300 ml of 2-propanol and 300 ml of water, then filtered through a 120 µm filter. The solvent from the colloidal filtrate is evaporated under vacuum to yield 19 g of black viscous residue (residue 1).

To the wet biomass left on the filter is added 500 ml of butanone, which is then filtered through a 120 µm filter. The solvent from the filtrate is evaporated under vacuum to yield 7 g of residue (residue 2).

Residue 1 and 2 are combined and 974 ml of glycerol is added and the mixture is homogenized by stirring, providing a solution according to the invention. This solution may also be used to provide a granulate according to the invention.

The homogenised mixture of residue 1 and 2 in glycerol is diluted in water as required and sprayed on to zeolite grits with a grain size of 0.4 to 10 mm. The zeolite grits are then air-dried.

The extract according to the invention as a solution in glycerol (S) and as a granulate (G) were compared with untreated areas as well as areas treated with known insecticides Force 1.5 G (F), which is in granulate form, and Teflustar (T), which is in liquid form. A number of parameters were compared such as the phytoxicity, vigour of the plant, root damage, lodging, fresh weight of the plant, moisture content of the soil and yield. Results from investigations carried out can be found in Tables 1 and 2.

**Table 1: Treatment of an area infested with Elateridae and planted with maize.**

| | | Application rate (kg/ha) | Vigour (%)¹ | Infest (%)¹ |
|---|---|---|---|---|
| Comparative example | Untreated area | N/A | 33 | 85 |
| Comparative example | F | 15 | 43 | 75 |
| Example according to the invention | G | 10 | 68 | 62 |
| Example according to the invention | G | 20 | 75 | 55 |

| | | | | |
|---|---|---|---|---|
| ¹ Determined 11 days after planting | | | | |

**Table 2: Treatment of an area infested with Diabrotica virgifera applied before sowing maize.**

| | | Application rate | Phytotoxicity (%)¹ | Vigour (%)¹ | Infest (%)¹ |
|---|---|---|---|---|---|
| Comparative example | Untreated area | N/A | 0 | 78 | 16 |
| Comparative example | T | 20 kg/ha | 1 | 88 | 20 |
| Comparative example | T | 40 kg/ha | 18 | 68 | 20 |
| Comparative example | T | 50 kg/ha | 21 | 60 | 23 |
| Example according to the invention | S | 4 l/ha | 0 | 95 | 13 |

| | | | | | |
|---|---|---|---|---|---|
| ¹ Determined after 21 days | | | | | |

The results in Table 1 show that areas treated with granulates according to the invention exhibit high vigour of plants and have a reduced rate of infestation in comparison to untreated areas and areas treated with a known insecticide. Similarly, the results in Table 2 show that areas treated with a solution according to the invention exhibit high vigour of the plants, low phytotoxicity and low rate of infestation in comparison to untreated areas and areas treated with a known insecticide.

Further experiments have shown that soil treated with granulates according to the invention do not considerably influence the behaviour of the earthworms in comparison to untreated soil.

## Claims

1. A multi-step extraction process for preparing a soil conditioning agent comprising an extract of a plant from the genus *Asclepias,*
wherein the extraction process comprises the steps of:
a) providing chopped and dried superterranean parts of the plant;
b) mixing the chopped and dried superterranean parts of the plant with one or more solvents selected from water and alcohol;
c) filtering the solvent-wet biomass of step b;
d) mixing the remaining solvent-wet biomass of step c with one or more solvents selected from a ketone type solvent; and
e) filtering the solvent-wet biomass of step d.

2. The process of claim 1, wherein in step b) the solvents are selected from water and isopropanol.

3. The process claim 1 or claim 2, wherein in step d) the solvent used is butanone.

4. The process of any one of claims 2 to 3, wherein the filtrates obtained from steps b) and d) are concentrated and the concentrate is optionally diluted with glycerol.

5. The process of any one of the preceding claims, wherein the plant is selected from *Asclepias albicans, Asclepias asperula, Asclepias incarnata, Asclepias speciosa, Asclepias subulata, Asclepias syriaca* and *Asclepias tuberosa.*

6. The process of any one of the preceding claims, wherein the soil conditioning agent comprises phytol and/or less than 50% terpene.

7. The soil conditioning agent comprising the extract of a plant from genus *Asclepias* obtainable by the multi-step extraction process of any one of the preceding claims.

8. A granulate comprising the soil conditioning agent of claim 7.

9. The granulate of claim 8, wherein the granulate comprises quartz sand or zeolite.

10. The granulate of claim 8 or 9, wherein the soil conditioning agent is adapted to be released slowly, preferably the soil conditioning agent is adapted to be released in more than 30 days.

11. A method of producing the granulate of claims 8 to 10.

12. A method of treating soil by applying a soil conditioning agent according to claim 7 or a granulate according to any one of claims 8 to 10 to the soil.

13. Use of a soil conditioning agent according to claim 7 or a granulate of claims 8 to 10 for treating soil.

14. Use of a soil conditioning agent according to claim 7 or a granulate of claims 8 to 10 to displace pests from the soil.

## Patentansprüche

1. Extraktionsverfahren, das aus mehreren Schritten besteht, zum Herstellen eines Erdbodenverbesserungsmittels, das einen Extrakt einer Pflanze der Gattung *Asclepias* umfasst,
wobei das Extraktionsverfahren die folgenden Schritte umfasst:
a) Bereitstellen von gehäckselten und getrockneten überirdischen Teilen der Pflanze;
b) Mischen der gehäckselten und getrockneten überirdischen Teile der Pflanze mit einem oder mehreren Lösungsmitteln, ausgewählt aus Wasser und Alkohol;
c) Filtern der lösungsmittelfeuchten Biomasse aus Schritt b,
d) Mischen der verbleibenden lösungsmittelfeuchten Biomasse aus Schritt c mit einem oder mehreren Lösungsmitteln, ausgewählt aus einem ketonartigen Lösungsmittel; und
e) Filtern der lösungsmittelfeuchten Biomasse aus Schritt d.

2. Verfahren nach Anspruch 1, wobei in Schritt b) die Lösungsmittel aus Wasser und Isopropanol ausgewählt werden.

3. Verfahren nach Anspruch 1 oder Anspruch 2, wobei es sich bei dem in Schritt d) verwendeten Lösungsmittel um Butanon handelt.

4. Verfahren nach einem der Ansprüche 2 bis 3, wobei die aus den Schritten b) und d) erhaltenen Filtrate konzentriert sind und das Konzentrat gegebenenfalls mit Glycerin verdünnt wird.

5. Verfahren nach einem der vorhergehenden Ansprüche, wobei die Pflanze ausgewählt ist aus *Asclepias albicans, Asclepias asperula, Asclepias incarnata, Asclepias speciosa, Asclepias subulata, Asclepias syriaca* und *Asclepias tuberosa.*

6. Verfahren nach einem der vorhergehenden Ansprüche, wobei das Erdbodenverbesserungsmittel Phytol und/oder weniger als 50 % Terpen umfasst.

7. Erdbodenverbesserungsmittel, das den Extrakt einer Pflanze der Gattung *Asclepias* umfasst, erhältlich mittels des Extraktionsverfahrens, das aus mehreren Schritten besteht, nach einem der vorhergehenden Ansprüche.

8. Granulat, das das Erdbodenverbesserungsmittel nach Anspruch 7 umfasst.

9. Granulat nach Anspruch 8, wobei das Granulat Quarzsand oder Zeolith umfasst.

10. Granulat nach Anspruch 8 oder 9, wobei das Erdbodenverbesserungsmittel dazu ausgelegt ist, langsam freigesetzt zu werden, wobei das Erdbodenverbesserungsmittel vorzugsweise dazu ausgelegt ist, über einen Zeitraum von mehr als 30 Tagen freigesetzt zu werden.

11. Verfahren zum Herstellen des Granulats nach Anspruch 8 bis 10.

12. Verfahren zum Behandeln von Erdboden durch Aufbringen eines Erdbodenverbesserungsmittels nach Anspruch 7 oder eines Granulats nach einem der Ansprüche 8 bis 10 auf den Erdboden.

13. Verwendung eines Erdbodenverbesserungsmittels nach Anspruch 7 oder eines Granulats nach den Ansprüchen 8 bis 10 zum Behandeln von Erdboden.

14. Verwendung eines Erdbodenverbesserungsmittels nach Anspruch 7 oder eines Granulats nach den Ansprüchen 8 bis 10, um Schädlinge aus dem Erdboden zu vertreiben.

## Revendications

1. Procédé d'extraction en plusieurs étapes pour préparer un agent d'amendement du sol comprenant un extrait d'une plante du genre *Asclepias,*
dans lequel le procédé d'extraction comprend les étapes consistant à :
a) fournir des parties subaériennes hachées et séchées de la plante ;
b) mélanger les parties subaériennes hachées et séchées de la plante avec un ou plusieurs solvants choisis parmi l'eau et l'alcool ;
c) filtrer la biomasse mouillée par solvant(s) de l'étape b ;
d) mélanger la biomasse mouillée par solvant(s) restante de l'étape c avec un ou plusieurs solvants choisis parmi un solvant de type cétone ; et
e) filtrer la biomasse mouillée par solvant(s) de l'étape d.

2. Procédé selon la revendication 1, dans lequel à l'étape b) les solvants sont choisis parmi l'eau et l'isopropanol.

3. Procédé selon la revendication 1 ou la revendication 2, dans lequel à l'étape d) le solvant utilisé est la butanone.

4. Procédé selon l'une quelconque des revendications 2 à 3, dans lequel les filtrats obtenus à partir des étapes b) et d) sont concentrés et le concentré est facultativement dilué avec du glycérol.

5. Procédé selon l'une quelconque des revendications précédentes, dans lequel la plante est choisie parmi *Asclepias albicans, Asclepias asperula, Asclepias incarnata, Asclepias speciosa, Asclepias subulata, Asclepias syriaca et Asclepias tuberosa.*

6. Procédé selon l'une quelconque des revendications précédentes, dans lequel l'agent d'amendement du sol comprend du phytol et/ou moins de 50 % de terpène.

7. Agent d'amendement du sol comprenant l'extrait d'une plante du genre *Asclepias* pouvant être obtenu par le procédé d'extraction en plusieurs étapes de l'une quelconque des revendications précédentes.

8. Granulé comprenant l'agent d'amendement du sol selon la revendication 7.

9. Granulé selon la revendication 8, dans lequel le granulé comprend du sable de quartz ou de la zéolite.

10. Granulé selon la revendication 8 ou 9, dans lequel l'agent d'amendement du sol est adapté pour être libéré lentement, de préférence l'agent d'amendement du sol est adapté pour être libéré en plus de 30 jours.

11. Procédé de production du granulé des revendications 8 à 10.

12. Procédé de traitement du sol en appliquant sur le sol un agent d'amendement du sol selon la revendication 7 ou un granulé selon l'une quelconque des revendications 8 à 10.

13. Utilisation d'un agent d'amendement du sol selon la revendication 7 ou d'un granulé des revendications 8 à 10 pour traiter le sol.

14. Utilisation d'un agent d'amendement du sol selon la revendication 7 ou d'un granulé des revendications 8 à 10 pour déplacer des parasites à partir du sol.
